Europäisches Patentamt

European Patent Office

Office européen des brevets

(11) Publication number: **0 419 155 A2**

# EUROPEAN PATENT APPLICATION

(21) Application number: 90310104.6

(22) Date of filing: 14.09.90

(51) Int. Cl.⁵: **C08L 23/02**, C08L 23/28, C08L 11/00

(30) Priority: 18.09.89 JP 241386/89

(43) Date of publication of application:
27.03.91 Bulletin 91/13

(84) Designated Contracting States:
**BE DE ES FR GB IT NL SE**

(71) Applicant: **TONEN SEKIYUKAGAKU K. K.**
**Togeki Building, 1-1, Tsukiji, 6-chome**
**Chuo-Ku, Tokyo(JP)**

Applicant: **EXXON CHEMICAL JAPAN LTD.**
**TBS Kaikan Bldg. 3-3 Akasaka 5-Chome (P.O.**
**Box 14)**
**Tokyo 107(JP)**

(72) Inventor: **Sezakai, Eiji**
**4-3, Shiomidai 3-chome**
**Yokosuka-shi, Kanagawa-ken(JP)**
Inventor: **Isono, Masatoshi**
**8-433, Shimoda-cho 5-chome, Kohoku-ku**
**Yokohama-shi, Kanagawa-ken(JP)**
Inventor: **Akami, Masatoshi**
**Dream Heights 11-406, 1403 Matano-cho,**
**Totsuka-ku**
**Yokahoma-shi, Kanagawa-ken(JP)**
Inventor: **Endo, Hisafumi**
**195-1-B-402, Komaoka-cho, Tsurumi-ku**
**Yokahoma-shi, Kanagawa-ken(JP)**

(74) Representative: **Dew, Melvyn John et al**
**Exxon Chemical Limited Exxon Chemical**
**Technology Centre P.O. Box 1**
**Abingdon Oxfordshire, OX13 6BB(GB)**

(54) Oil resistant thermoplastic elastomer composition.

(57) A thermoplastic elastomer composition having improved oil resistance and low-temperature characteristics as well as mechanical strength, elasticity, moldability, long-term heat resistance, gas impermeability and damping characteristics. The composition comprises a polyolefin, an oil resistant rubber, a compatibility halogenated butyl rubber, and a mineral oil softner having a pour point in the range of -50°C to -10°C.

EP 0 419 155 A2

## OIL RESISTANT THERMOPLASTIC ELASTOMER COMPOSITION.

The present invention relates to a thermoplastic elastomer composition which is superior in mechanical strength, heat stability, and moldability, as well as oil resistance and low-temperature characteristics.

BACKGROUND OF THE INVENTION

Thermoplastic elastomer finds general use in automotive parts, etc. as a substitute for rubber or a compromise between rubber and plastics.

There have been proposed a variety of thermoplastic elastomers. For example, Japanese Patent Publication No. 34210/1978 discloses a thermoplastic blend composed of partly cured monoolefin copolymer rubber and polyolefin plastics. The monoolefin copolymer rubber is an elastomer such as ethylene-propylene copolymer rubber (EPR) and ethylene-propylene-nonconjugated diene terpolymer (EPDM). The polyolefin plastic is polyethylene or polypropylene. It undergoes partial curing under dynamic conditions, namely during mastication.

The above-mentioned composition composed of polyolefin resin and partly crosslinked monoolefin copolymer rubber has improved tensile characteristics, flexibility, and rebound resilience, but lacks good moldability and long-term heat stability. to overcome these disadvantages, there was proposed a composition of partly crosslinked thermoplastic elastomer which is produced by the dynamic heat treatment, in the presence of an organic peroxide, of a mixture composed of (a) 90-40 wt% of peroxide-crosslinkable olefin-based copolymer rubber and (b) 10-60 wt% of peroxide-decomposable olefin-based plastic, with the total amount of (a) and (b) being 100 wt%, and 5-100 wt% of (c) peroxide-noncrosslinkable hydrocarbon-based rubbery substance and/or (d) mineral oil-based softening agent. (See Japanese Patent Publication No. 15741/1981.) The peroxide-crosslinkable olefin-based copolymer rubber (a) typically includes ethylene-propylene copolymer rubber or ethylene-propylene-nonconjugated diene copolymer rubber, the peroxide-decomposable olefin-based plastic (b) typically includes isotactic polypropylene, and the peroxide-noncrosslinkable hydrocarbon-based rubbery substance (c) typically includes polyisobutylene or butyl rubber.

The composition just mentioned above contains the olefin-based copolymer rubber (such as ethylene-propylene copolymer rubber and ethylene-propylene-nonconjugated diene copolymer rubber which are capable of crosslinking with a peroxide) in the crosslinked form, but is also contains the polyisobutylene or butyl rubber in the uncrosslinked form, including degraded molecules. Consequently, the composition is poor in mechanical strength, moldability, compression set, and heat resistance.

To cope with this problem, there was proposed a thermoplastic elastomer composition partly crosslinked with a metal oxide and/or metal chloride in place of an organic peroxide as a crosslinking agent. This composition is composed of (A) 10-90 wt% of crystalline polypropylene, (B) 10-90 wt% of halogenated butyl rubber (with the total amount of (A) and (B) being 100 wt%), (C) 10-120 wt% of olefin-based copolymer rubber, and (D) 1-90 wt% of modified polyolefin. (See Japanese Patent Laid-open No. 291639/1986.) In this composition, the halogenated butyl rubber is chlorinated butyl rubber.

The composition just mentioned above, however, lacks good mechanical strength, presumably because chlorinated butyl rubber alone is crosslinked by ZnO or $ZnC_2$.

To address this problem, there was proposed a peroxide-crosslinked thermoplastic elastomer composition having good mechanical strength, which includes brominated butyl rubber, in place of chlorinated butyl rubber, which is capable of crosslinking by a peroxide without molecular degradation. The composition is composed of (A) 10-90 wt% of crystalline polypropylene, (B) 10-90 wt% of brominated butyl rubber, (C) 10-120 wt% of olefin-based copolymer rubber (for 100 wt% of the total amount of (A) and (B)), and 10-150 wt% of mineral oil softener (for 100 wt% of the total amount of (A) and (B)). (See Japanese Patent Laid-open No. 251444/1988.) This composition has good mechanical strength, heat stability, and moldability.

The composition just mentioned above still has room for improvement in oil resistance. Oil resistance is one of the important characteristic properties for thermoplastic elastomer to be used for automotive parts and other machine parts.

Thermoplastic elastomer having improved oil resistance has been developed. The improvement in oil resistance has been accomplished by increasing the degree of crosslinking of rubber or by blending with rubber having good oil resistance. Merely increasing the degree of crosslinking of rubber gives rise to a composition having poor flowability and hence poor processability. On the other hand, blending with an oil-resistant rubber gives rise to a composition having poor tensile strength and low-temperature characteristics

2

because the oil-resistant rubber is poor in compatibility with a resin such as polyolefin.

For this reason, the composition containing an oil resistant rubber needs a means which improves compatibility with a resin such as polyolefin. It is known that a blend of a thermoplastic olefin resin and two rubber components (especially halogenated butyl rubber and polychloroprene) affords a thermoplastic polymer composition having good physical properties and low compression set along with improved processability, flowability, and oil resistance. For example, there is disclosed a thermoplastic elastomer composition composed of a polyolefin resin, polychloroprene rubber, which has good oil resistance, and halogenated butyl rubber, which is partly crosslinked in the presence of a crosslinking agent (a metal oxide such as ZnO). The third component improves the compatibility of the first two components. The halogenated butyl rubber is chlorinated or brominated butyl rubber. (See Japanese Patent Laid-open No. 148246/1986.)

In view of the above-mentioned technology, there has been proposed a thermoplastic elastomer composition which is formed by crosslinking a mixture composed of (A) 5-50 wt% of polyolefin, (B) 5-50 wt% of halogenated butyl rubber, (C) 5-50 wt% of chloroprene rubber, and (D) 10-50 wt% of mineral oil softener, in the presence of (E) a metal oxide or metal chloride as a crosslinking agent. (See Japanese Kokai 82-36243; European Patent Publication 354685, February 14, 1990.)

Still additional improvements in performance requires a thermoplastic elastomer composition having good mechanical strength, heat stability, and moldability, as well as improved oil resistance and low-temperature characteristics. The above-mentioned compositions (disclosed in Japanese Patent Laid-open No. 148246/1986 and Japanese Patent Appliction No. 187578/1988) are undoubtedly superior in oil resistance but are not necessarily satisfactory when it comes to low-temperature characteristics.

Accordingly, it is an object of the present invention to provide a thermoplastic elastomer composition which is improved not only in mechanical strength, elasticity, moldability, long-term heat resistance, gas impermeability, and damping characteristics but also in oil resistance and low-temperature characteristics.

To achieve the above-mentioned object, the present inventors carried out extensive studies, which led to a finding that a composition having improved oil resistance and low-temperature characteristics can be made from a polyolefin, an oil-resistant rubber, a rubber which compatibilizes the two components, and a mineral oil softener having a pour point within a specified temperature range.

## SUMMARY OF THE INVENTION

An oil-resistant, crosslinked thermoplastic elastomer composition comprising (A) 5-50 wt% of polyolefin, (B) 5-50 wt% of halogenated butyl rubber, (C) 5-50 wt% of chloroprene rubber, (D) 10-50 wt% of mineral oil softener, and (E) metal oxide or metal chloride as a crosslinking agent, with the total amount of components (A), (B), (C), and (D) being 100 wt%, wherein said composition is crosslinked in the presence of (E), characterized in that said mineral oil softener has a pour point in the range of -50 °C to -10 °C.

## DETAILED DESCRIPTION

The thermoplastic elastomer composition of the present invention comprises:

### (A) Polyolefin

This component is designated as component-A. It is a homopolymer or copolymer of (α-olefin monomer such as ethylene, propylene, 1-butene, 1-hexene, and 4-methyl-1-pentene. It should preferably be crystalline polypropylene. "Crystalline polypropylene" as used in this specification embraces both homopolymers of propylene and copolymers of propylene with one of the above-mentioned (α-olefin monomers. It may have a melt flow index (MFR) of 0.3-60 g/10 min., preferably 1-40 g/10 min, more preferably 3-30 g/10 min. The copolymer may contain more than 60 wt% of propylene. Crystalline polypropylene has the highest melting point among polyolefins, and it contributes to the improvement of heat resistance and mechanical strength.

The above-mentioned olefin polymers as component-A may be used alone or in combination with one another. The composition should contain the polyolefin in an amount of 5-50 wt%, preferably 5-40 wt%.

## (B) Halogenated Butyl Rubber

This component is designated as component-B. It is a halogenated isobutylene-isoprene copolymer. It may contain 0.5-4.0 wt% of halogen and have a Mooney viscosity $ML_{1+8}$ (100°C) of 20-100 and a degree of unsaturation of 0.5-4.0 mol%.

This component permits the composition to be easily crosslinked in the presence of a metal oxide such as ZnO. It also imparts heat resistance, damping characteristics, and gas impermeability to the composition. In addition, it functions as a binder for polyolefin and chloroprene at their interface. In other words, it compatibilizes polyolefin and chloroprene rubber. The content of the halogenated butyl rubber in the composition should be 5-50 wt%. With a content less than 5 wt%, it is not enough for the composition to fully exhibit the above-mentioned characteristic properties. With a content in excess of 50 wt%, it makes the composition less flowable and hard to mold. A preferred content is 5-40 wt%.

Preferred examples of the halogenated butyl rubber include chlorinated butyl rubber and brominated butyl rubber. The former is most desirable.

## (C) Chloroprene Rubber

This component is designated as component-C. It has outstanding oil resistance and contributes to the improved oil resistance and flexibility of the composition of the present invention.

It should preferably have a Mooney viscosity $ML_{1+4}$ (100°C) of 20-120. It should be contained in the composition in an amount of 5-50 wt%. With a content less than 5 wt%, it does not impart sufficient oil resistance to the composition. With a content in excess of 50 wt%, it makes the composition less flowable and hard to mold. A preferred content is 5-40 wt%.

## (D) Mineral Oil Softener

This component is typically added to a rubber compound during mixing to extend the rubber, thereby facilitating processing and dispersing carbon black or mineral filler. It softens the rubber, thereby improving moldability and also improves flexibility and elasticity of the vulcanized rubber. It is a high-boiling fraction of petroleum. It is divided into paraffin series, naphthene series, and aromatic series.

The mineral oil softener used in the present invention should have a pour point in the range of -10°C to -50°C, preferably -20°C to -50°C. A preferred example is "Sunthene 410" (a product of Sun Oil Corp., U.S.A.), one of the naphthenic series.

The mineral oil softener having a low pour point reduces polymeric intermolecular forces of the composition, thereby improving the dispersion of the components. This leads to the lowering of the brittle temperature of the composition, which in turn leads to the significant improvement of the elastomeric properties of the composition at low temperatures. The function of the mineral oil softener to reduce intermolecular forces also contributes to the improved moldability of the composition at low temperatures.

The content of the mineral oil softener in the composition should be 10-50 wt%. With a content less than 10 wt%, it does not produce the satisfactory effect. With a content in excess of 50 wt%, it lowers the heat resistance and mechanical strength of the composition and it also bleeds from the composition and impairs appearance. A preferred content is 5-40 wt%.

The total amount of component-A to component-D mentioned above should be 100 wt%.

## (E) Crosslinking Agent

The crosslinking agent used in the present inventiuon includes metal oxides (such as ZnO, MgO, PbO, and CaO) and metal chlorides (such as $ZnCl_2$ and $SnCl_4$). A preferable agent is ZnO.

The crosslinking agent functions to crosslink the halogenated butyl rubber and chloroprene. For sufficient crosslinking, it should be used in an amount of 0.2-10 wt%, more preferably 1-5 wt%, for the total amount (100 wt%) of component-A to component-D.

Optionally, the crosslinking agent may be used in combination with a vulcanization accelerator, such as N,N'-diethylthiourea, di-o-triguanidine, dipentamethylenethiuram tetrasulfide, ethylene trithiocarbonate, 2-mercaptobenzothiazole, benzothiazole disulfide, N-phenyl-β-naphthylamine, tetramethylthiuram disulfide, zinc diethyldithiocarbamate, zinc dibutyldithiuram disulfide and zinc dimethyl dithiocarbamate. An additional example is di-o-tolylguanidine borate (such as "Nocceler PR" may be Ouchi Shinko Kagaku Kogyo Co., Ltd.). They may be used in combination with one another. The amount of the vulcanization accelerator should be more than 0.2 wt%, preferably 1-5 wt%, for the total amount (100 wt%) of component-A to component-D.

(F) Other Components

The composition may optionally include stabilizers (such as antioxidant, UV light absorber, and metal poison inhibitor) and additives (such as antistatic agent, electrical property improver, flame retardant, and pigment), according to need.

The thermoplastic elastomer composition of the present invention is produced by mixing the above-mentioned components and subjecting the mixture to dynamic heat treatment (or melt mixing). The melt mixing may be accomplished by using any known apparatus such as open mixing roll, internal (Banbury®) mixer, extruder (including twin-screw extruder), kneader, and continuous mixer. According to a preferred procedure, the components are mixed for 1-10 minutes and the resulting mixture is further mixed with a crosslinking agent and other components for 1-10 minutes. The thus obtained composition is ready for blow molding, extrusion molding, injection molding, and calendering with an apparatus commonly used for thermoplastics.

EXAMPLE

The invention will be described in more detail with reference to the following examples.

Examples 1 to 7

A mixture was prepared according to the formulation shown in Table 1 by mixing the following four components at 165°C for 1-5 minutes using a Banbury® mixer.

Component-A: Propylene-ethylene block copolymer having an MFR of 15 g/10 min ("BJ315" made by Tonen Sekiyu Kagaku K.K.). (Referred to as "PP block" hereinafter.)

Component-B: Chlorinated butyl rubber containing 2 wt% of chlorine and having a Mooney viscosity $ML_{1+8}$ (100°C) of 55 and a degree of unsaturation of 2 mol% ("Chlorobutyl 1066" made by Exxon Chemical Co., Ltd.). (Referred to as "Cl-IIR" hereinafter.)

Component-C: Chloroprene rubber having a Mooney viscosity $ML_{1+4}$ (100°C) of 38 ("Denkachloroprene M30" made by Denki Kagaku Kogyo Co., Ltd.). (Referred to as "CR" hereinafter.)

Component-D: Naphthene-series process oil softener having a pour point of -45°C ("Sunthene 410" made by Sun Oil Corp., U.S.A.). (Referred to as "softener" hereinafter.)

The resulting mixture (100 parts by weight) was blended with 1 part by weight each of ZnO ("No. 3" made by Sakai Kagaku Kogyo Co., Ltd.) as a crosslinking agent and di-o-tolylguanidine salt of dicatechol borate ("Nocceler PR" made by Ouchi Shinko Kagaku Kogyo Co., Ltd.) as a vulcanization accelerator, followed by melt mixing at 175°C for 2-20 minutes.

The resulting composition was formed into a sheet by injection molding and the sheet was cut into pellets. The pellets were made into specimens for the following tests.

(1) MFR: According to JIS K7210, at 230°C under a load of 10 kg.

(2) Hardness (JIS A): According to JIS K6310.

(3) Tensile strength (kg/cm$^3$): According to K6310, using a No. 3 dumb-bell specimen, at a pulling rate of 500 mm/min.

(4) Tensile elongation (%): According to JIS K6310.

(5) Tear strength: According to JIS K6310, using a B-type specimen, at a pulling rate of 500 mm/min.

(6) Compression set: According to JIS K6310, compressed 25% at 70°C for 22 hours.

(7) Oil resistance: According to JIS K6310, expressed in terms of the change of volume that takes place after immersion in JIS No. 3 oil at 100°C for 70 hours.

(8) Brittle temperature (°C): According to JIS K6310. The results of the tests are shown in Table 1.

Comparative Example 1

The same procedure as in Example I was repeated except that the formulation was changed as shown in Table 1. Component-B (C1-IIR) and component-C (CR) were replaced by ethylene-propylene rubber (EPR) ("EPO-2P" made by Japan Synthetic Rubber Co., Ltd.) and ZnO was replaced by peroxide ("Perhexyne 2,5B" made by Nippon Oils and Fats Co., Ltd.). The resulting compound was made into test specimens, which were tested in the same manner as in Example 1. The results are shown in Table 1.

Comparative Example 2

The same procedure as in Example 1 was repeated except that component-D (softener) was replaced by "Sunthene 4240" having a pour point of -7.5°C (made by Sun Oil Corp., U.S.A.). The resulting compound was made into test specimens, which were tested in the same manner as in Example 1. The results are shown in Table 1.

Table 1

| Example No. | 1 | 2 | 3 | 4 | 5 | 6 | 7 | | |
|---|---|---|---|---|---|---|---|---|---|
| Comparative Example No. | | | | | | | | 1 | 2 |
| Formulation | | | | | | | | | |
| PP block (wt%) | 21 | 21 | 21 | 10 | 40 | 21 [1] | 21 | 20 | 21 |
| C1-IIR (wt% | 21 | 26 | 32 | 25 | 20 | 21 | 21 | - | 21 |
| CR (wt%) | 21 | 16 | 10 | 25 | 20 | 21 | 21 [2] | - | 21 |
| Softener (wt%) | 37 | 37 | 37 | 40 | 20 | 37 | 37 | 20 | 37 [3] |
| EPR (wt%) | - | - | - | - | - | - | - | 60 | - |
| ZnO (phr) | 1 | 1 | 1 | 1 | 1 | 1 | 1 | - | 1 |
| Peroxide (phr) | - | - | - | - | - | - | - | 1 | - |
| Properties | | | | | | | | | |
| MFR (g/10 min) | 5 | 5 | 10 | 2 | 15 | 5 | 5 | 20 | 4 |
| Hardness (JIS A) | 75 | 73 | 73 | 60 | 95 | 76 | 74 | 72 | 75 |
| Tensile strength (kg/cm²) | 85 | 90 | 80 | 70 | 120 | 85 | 85 | 70 | 85 |
| Tensile elongation (%) | 300 | 300 | 250 | 250 | 300 | 300 | 300 | 300 | 250 |
| Tear strength (kg/cm) | 40 | 45 | 45 | 42 | 50 | 40 | 40 | 30 | 40 |
| Compression set (%) | 30 | 30 | 35 | 25 | 45 | 30 | 30 | 40 | 30 |
| Oil resistance (°C) | 40 | 35 | 30 | 40 | 20 | 40 | 40 | 150 | 40 |
| Brittle temperature (°C) | -60 | -55 | -50 | -50 | -45 | -50 | -60 | -60 | -35 |

Notes to Table 1

(1) PP homopolymer ("J215" made by Tonen Sekiyu Kagaku K.K.)
(2) Brominated butyl rubber ("Bromobutyl 2244" made by Exxon Chemical Co.)
(3) Naphthene-series process oil ("Sunthene 4240" made by Sun Oil Corp., U.S.A.)
It is noted from Table 1 that the thermoplastic elastomer composition of the present invention has high mechanical strength, good oil resistance, and a low brittle temperature, whereas the composition in Comparative Example 1 containing ethylene-propylene rubber in place of CR and C1-IIR has poor oil resistance and low tear strength and the composition in Comparative Example 2 containing a softener having a high pour point has a high brittle temperature and is poor in low temperature characteristics.

The present invention provides a thermoplastic elastomer composition which is superior in mechanical strength, long-term heat stability, moldability, oil resistance, and low-temperature characteristics. It is suitable for use as automotive parts, building parts, and electric appliance parts which come into contact with oil or are exposed to cold environments over a long period of time.

The composition of the present invention has a good balance of properties such as flexibility, strength, heat resistance, oil resistance, and low-temperature characteristics. Having good moldability, it can be easily formed into sheets, boots, hoses, etc. by injection molding, blow molding, extrusion molding, or the like.

## Claims

1. An oil-resistant, crosslinked thermoplastic elastomer composition comprising (A) 5-50 wt% of polyolefin, (B) 5-50 wt% of halogenated butyl rubber, (C) 5-50 wt% of chloroprene rubber, (D) 5-50 or 10-50 wt% of mineral oil softener, and (E) metal oxide or metal chloride as a crosslinking agent, with the total amount of components (A), (B), (C), and (D) being 100 wt%, wherein said composition is crosslinked in the presence of (E), characterized in that said mineral oil softener has a pour point in the range of -50°C to -10°C.

2. A composition according to claim 1 wherein said crosslinking agent is zinc oxide.

3. A composition according to claim 1 or 2 wherein (E) is employed in an amount of from 0.2 to 10 wt% based on the total of (A), (B), (C) and (D).

4. A composition according to any one of the preceding claims which comprises from 5-40 or 10-40 wt% (D).

5. A composition according to any one of the preceding claims wherein (D) has a pour point of from -50°C to -20°C.

6. A composition according to any one of the preceding claims wherein (D) is a naphthenic petroleum fraction.

7. A composition according to any one of the preceding claims which comprises from 5-40 wt% of (A) and/or from 5-40 wt% of (B) and/or from 5-40 wt% of (C).

8. A composition according to any one of the preceding claims wherein (B) is chlorinated butyl rubber.

9. A composition according to any one of the preceding claims wherein (C) has a Mooney viscosity ML-(1+4) at 100°C of from 20-120.

10. A process for producing a composition according to any one of the preceding claims which comprises subjecting (A), (B), (C), (D) and (E) to melt mixing conditions to mix the components and achieve crosslinking.